# EUROPEAN PATENT APPLICATION

(11) **EP 4 283 713 A1**
(43) Date of publication of application: **29.11.2023**
(21) Application number: 22912780.8
(22) Date of filing: 09.12.2022
(51) Int. Cl.: H01M 4/136

(54) **HIGH-RATE LITHIUM IRON PHOSPHATE POSITIVE ELECTRODE MATERIAL AND PREPARATION METHOD THEREFOR, POSITIVE ELECTRODE THEREOF, AND BATTERY**

(30) Priority: 15.04.2022 CN 202210395265
(71) Applicant: HUBEI WANRUN NEW ENERGY TECHNOLOGY CO., LTD., Shiyan, Hubei 442500 (CN)
(72) Inventor: WANG, Qin, Shiyan City, Hubei 442500 (CN)
(74) Representative: Loyer & Abello
(86) International application number: PCT/CN2022/137784
(87) International publication number: WO 2023/197638

(57) **Abstract**

The present disclosure provides a high-rate lithium iron phosphate positive electrode material comprising lithium iron phosphate and carbon coated on a surface of the lithium iron phosphate, wherein a primary particle of the material has a particle size of 30-70 nm. The material of the present disclosure has a small and uniform primary particle size, no large single crystal particles, and a high specific surface area, and the battery prepared with the material has a high capacity, good cycle performance, excellent rate performance and low temperature performance. The present disclosure also provides a method for preparing the high-rate lithium iron phosphate positive electrode material, which has a simple process, is environmentally friendly, does not need precursors or expensive equipment, and has low cost.

## Description

The present application claims the priority of Chinese invention patent application No. 202210395265.0 filed on April 15, 2022, entitled "High-rate lithium iron phosphate positive electrode material, method for preparing the same, positive electrode and battery including the same", the disclosure of which is incorporated by reference herein.

### TECHNICAL FIELD

The present disclosure relates to the field of batteries, in particular to a high-rate lithium iron phosphate positive electrode material, a method for preparing the same, a positive electrode and a battery including the same.

### BACKGROUND

Currently, the automotive start-stop battery market is dominated by lead-acid batteries, and AGM lead-acid batteries are mainly used in the field of start-stop batteries. Due to the strict carbon emission policies in Europe and Japan, start-stop batteries are prevalent in European and Japanese markets. Research shows that in 2016, more than 70% and 50% of the new cars in Europe and Japan are installed with start-stop batteries, and these proportions are higher than that in China, which is 15%.

China is making policies such as carbon quotas and carbon credits to solve the increasingly severe environmental problems, which will to some extent force original equipment manufacturers (OEMs) to invest more in emission reduction and energy saving. China has required that the average fuel consumption of new passenger vehicles is reduced to 5 L/100km by 2020, and the average fuel consumption of commercial vehicles is reduced by 10% as compared to that in 2015. These targets for fuel consumption, which are not comparable to those in Europe but are almost equal to those in Japan, are a great challenge to OEMs. Research shows that car start-stop systems save more than 8% of the fuel for cars in urban traffic situations, and may reduce CO₂ emissions and make cars start quickly and safely. Accordingly, installing start-stop power supplies for cars becomes one of the effective means for OEMs to reduce fuel consumption.

At present, with the development of lithium iron phosphate and the continuous reduction of the cost of producing lithium iron phosphate batteries, it is the general trend to use lithium iron phosphate for start-stop power supplies, but the current lithium iron phosphate has certain defects in low-temperature performance and rate performance.

### SUMMARY

In view of this, the technical problem to be solved by the present disclosure is to provide a high-rate lithium iron phosphate positive electrode material, a method for preparing the same, a positive electrode and a battery including the same. The high-rate lithium iron phosphate positive electrode material provided by the present disclosure has a high capacity and good rate performance, excellent low temperature performance and cycle performance.

The present disclosure provides a high-rate lithium iron phosphate positive electrode material comprising lithium iron phosphate and carbon coated on a surface of the lithium iron phosphate, and a primary particle of the material has a particle size of 30-70 nm.

In particular, the high-rate lithium iron phosphate positive electrode material provided by the present disclosure is a secondary particle formed by agglomeration of primary particles, and the primary particle comprises lithium iron phosphate and carbon coated on the surface of the lithium iron phosphate. The lithium iron phosphate is common lithium iron phosphate in the art. The carbon is uniformly coated on the surface of the lithium iron phosphate, which may enhance its electronic conductivity. In one embodiment, the carbon has a content of 1-5 wt%, and preferably 2.21 wt%.

The high-rate lithium iron phosphate positive electrode material of the present disclosure has a small primary particle size and can obtain good electrochemical performances. In one embodiment, the primary particle of the material has a particle size of 50 nm.

The high-rate lithium iron phosphate positive electrode material provided by the present disclosure has a concentrated particle size distribution and no large single crystal particles, and can obtain good electrochemical performances. In one embodiment, the high-rate lithium iron phosphate positive electrode material has a D10 of 0.1-1 µm, a D50 of 1-5 µm, and a D90 of 6-9 µm.

The high-rate lithium iron phosphate positive electrode material provided by the present disclosure has a high porosity, and a large specific surface area measured by a BET specific surface area test method, which is conducive to obtaining good electrochemical performances. In one embodiment, the high-rate lithium iron phosphate positive electrode material has a specific surface area of 15-25 m²/g, and preferably 19.16 m²/g.

The present disclosure provides a method for preparing the above high-rate lithium iron phosphate positive electrode material, comprising steps of:
mixing an organic ferrous compound, an organic phosphorus compound and an organic lithium compound to obtain a mixture which is granulated and then calcined to obtain the high-rate lithium iron phosphate positive electrode material.

Specifically, in the present disclosure, the organic ferrous compound, the organic phosphorus compound and the organic lithium compound are first stirred and mixed uniformly at a temperature of 50-60 °C at a speed of 300-500 r/min.

The present disclosure can prepare a lithium iron phosphate positive electrode material having a relatively small particle size using the organic ferrous compound, the organic phosphorus compound and the organic lithium compound, which contain carbon chains, as raw materials. In one embodiment, the organic ferrous compound includes one or more of ferrous gluconate, ferrous citrate, ferrous acetate, and ferrous glycinate. In one embodiment, the organic phosphorus compound includes one or more of tributyl phosphate and trioctyl phosphate. In one embodiment, the organic lithium compound includes one or more of lithium acetate and lithium citrate. In one embodiment, a molar ratio of Fe, P and Li in the organic ferrous compound, the organic phosphorus compound and the organic lithium compound is 1:1:1-1.1, and preferably 1:1:1.03-1.05.

In the present disclosure, the organic ferrous compound, the organic phosphorus compound and the organic lithium compound are stirred and mixed uniformly to obtain a mixture which is granulated and then calcined. The granulation in the present disclosure is carried out by a common granulation method in the art, such as extrusion granulation, spray granulation or centrifugal granulation. The calcination of the present disclosure is carried out in two steps: performing heating to a first temperature at a first heating rate, and holding the temperature for a first period of time; and then performing heating to a second temperature at a second heating rate, and holding the temperature for a second period of time.

In one embodiment, the calcination specifically comprises: performing heating to a temperature of 250-400 °C at a heating rate of 50-80 °C/h, and holding the temperature for 2-5 hours; and then performing heating to a temperature of 600-800 °C at a heating rate of 100-150 °C/h, and holding the temperature for 5-10 hours. In one embodiment, the calcination specifically comprises: performing heating to a temperature of 300-350 °C at a heating rate of 50-80 °C/h, and holding the temperature for 2-3 hours; and then performing heating to a temperature of 680-720 °C at a heating rate of 100-150 °C/h, and holding the temperature for 4-6 hours. In the present disclosure, the first heating rate is less than the second heating rate, so that consumption of carbon may be avoided and a high content of magnetic substances may be prevented. In the present disclosure, the second temperature is higher than the first temperature, so that a higher particle crystallinity may be obtained and a content of magnetic substances may be reduced.

In the present disclosure, the organic ferrous compound, the organic phosphorus compound and the organic lithium compound are stirred and mixed uniformly, granulated and then calcined in an inert gas atmosphere. Specifically, the calcination of the present disclosure is carried out in a roller furnace which includes a first heating section, a first holding section, a second heating section, a second holding section and a cooling section connected in sequence; the inert gas is introduced into the roller furnace at a volume of 10 to 15 times the volume of the roller furnace per hour, so that the pressure inside the furnace chamber is 50 to 100 Pa higher than the external atmospheric pressure. In one embodiment, the volume ratio of the inert gas in the first heating section, the first holding section, the second heating section, the second holding section and the cooling section is 2:1.5-2:1-2:0.5-1.2. In one embodiment, the calcination is carried out in a helium, argon or nitrogen atmosphere.

In the present disclosure, the organic ferrous compound, the organic phosphorus compound and the organic lithium compound are mixed uniformly and granulated, and then calcined to obtain a material which is then pulverized, graded, screened, removed of iron, and packaged. The pulverization, grading, screening, iron removal and packaging in the present disclosure are common processing methods in the art.

Specifically, in the present disclosure, the material obtained from the calcination is subjected to air jet pulverization, grading by a grading wheel, screening by an ultrasonic vibrating screen, iron removal by an electromagnetic iron remover and packaging. In one embodiment, the air jet pulverization is performed with nitrogen containing less than 100 ppm of oxygen, which has a temperature of 130-150 °C and a pressure of 0.3-0.5 MPa, and the nitrogen has a dew point of lower than -20 °C. In one embodiment, the grading is performed by a 15-25 cm grading wheel, on which ceramic blades are evenly distributed and spaced at a distance of 1-1.5 cm, at a rotate speed of 500-700 r/min. In one embodiment, the screening is performed by an ultrasonic vibrating screen having a pore size of 100-200 mesh at a power of 3-5 kW. In one embodiment, the iron removal is performed by a 15000 GS electromagnetic iron remover for no less than 15 seconds. In one embodiment, the packaging is performed at a temperature of 15-25 °C.

The present disclosure provides a positive electrode including the lithium iron phosphate positive electrode material as described.

The present disclosure also provides a battery including the above positive electrode.

The high-rate lithium iron phosphate positive electrode material provided by the present disclosure comprises lithium iron phosphate and carbon coated on the surface of the lithium iron phosphate; and the primary particle of the material has a particle size of 30-70 nm. The material of the present disclosure has a small and uniform primary particle size, no large single crystal particles, and a high specific surface area, and the battery prepared with the material has a high capacity, good cycle performance, excellent rate performance and low temperature performance. The examples show that the battery prepared with the material according to the present disclosure has a discharge capacity of as high as 140 mAh/g or more at 10C, and a capacity retention rate of 90% or more at -20°C, which meets the requirements for start-stop power supplies. The present disclosure also provides a method for preparing the high-rate lithium iron phosphate positive electrode material, which has a simple process, is environmentally friendly, does not need precursors or expensive equipment, and has low cost.

### BRIEF DESCRIPTION OF THE DRAWINGS

Fig. 1 is an SEM image of the high-rate lithium iron phosphate positive electrode material of the present disclosure at low magnification;
Fig. 2 is an SEM image of the high-rate lithium iron phosphate positive electrode material of the present disclosure at high magnification;
Fig. 3 is the XRD spectrum of the high-rate lithium iron phosphate positive electrode material of the present disclosure;
Fig. 4 is the charge-discharge graph of the high-rate lithium iron phosphate positive electrode material of the present disclosure at 1C, 2C, 5C and 10C; and
Fig. 5 is the cycle performance graph of the high-rate lithium iron phosphate positive electrode material of the present disclosure at 1C at ambient temperature.

### DETAILED DESCRIPTION

The present disclosure discloses a high-rate lithium iron phosphate positive electrode material, a method for preparing the same, a positive electrode and a battery including the same. Those skilled in the art may refer to the content herein to appropriately improve the process parameters to achieve this. In particular, it should be noted that all similar substitutions and modifications will be apparent to those skilled in the art, and they are all considered to be encompassed in the present disclosure. The methods and applications of the present disclosure have been described by means of preferred embodiments, and it is apparent that the person concerned can implement and apply the techniques of the present disclosure by making modifications or appropriate changes and combinations to the methods and applications herein without departing from the content, spirit and scope of the present disclosure.

The present disclosure is further described below in conjunction with examples.

### Example 1

Ferrous gluconate, tributyl phosphate and lithium acetate, in which a molar ratio of Fe, P and Li was 1:1:1.04, were mixed and stirred at a speed of 400 r/min at a temperature of 55 °C to obtain a paste.

The paste was granulated by extrusion and then put into a sagger which was then put into a roller furnace for calcination under the protection of nitrogen, the furnace including a first heating section, a first holding section, a second heating section, a second holding section and a cooling section. The paste was heated up to a temperature of 320 °C at a heating rate of 65 °C/h in the first heating section, and held at the temperature of 320 °C for 3 hours in the first holding section; and then heated up to a temperature of 690 °C at a heating rate of 120 °C/h in the second heating section, and held at the temperature of 690 °C for 5 hours in the second holding section; then cooled to a temperature ≤60 °C in the cooling section; and then discharged from the furnace, to obtain a calcined material.

The first heating section, the first holding section, the second heating section and the cooling section of the roller furnace were each equipped with a tuyere connected with a induced draft fan; nitrogen was introduced into the first heating section, the first holding section, the second heating section, the second holding section and the cooling section at a volume ratio of 2:1.8:1.5:0.8:2 through the bottom of the furnace. During the calcination, the nitrogen was introduced at a volume 13 times the volume of the chamber of the roller furnace per hour, and the pressure inside the chamber was 80 Pa higher than the external pressure.

The calcined material was pulverized by a fluidized bed jet mill with nitrogen having an oxygen content of less than 100 ppm and a dew point of lower than -20 °C at a pressure of 0.4 MPa and a temperature of 140 °C to obtain a pulverized material. The pulverized material was graded by a grading wheel having a diameter of 20 cm and made of ceramic, on which ceramic blades are evenly distributed and spaced at a distance of 1.2 cm, at a rotate speed of 600 r/min. The pulverized and graded material was then screened by an 150 mesh ultrasonic vibrating screen at an ultrasonic power of 4 kW, and then subjected to two-stage iron removal by staying in a 15000 Gs electromagnetic iron remover for ≥15 seconds. The material obtained from the iron removal was introduced into a constant temperature and humidity packaging room, and vacuum-packaged at a humidity of ≤10 % and a temperature of 25 °C to obtain the high-rate lithium iron phosphate positive electrode material.

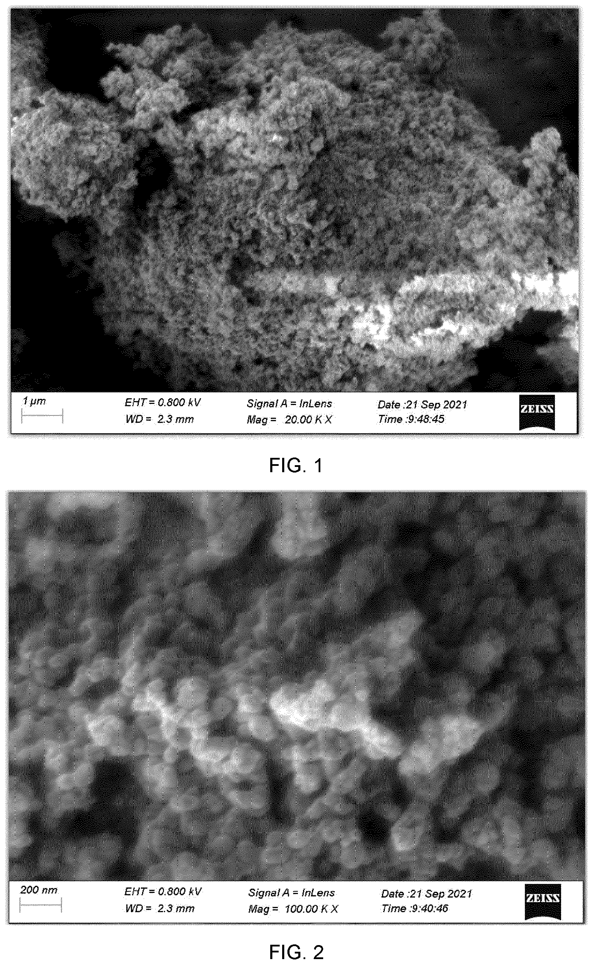

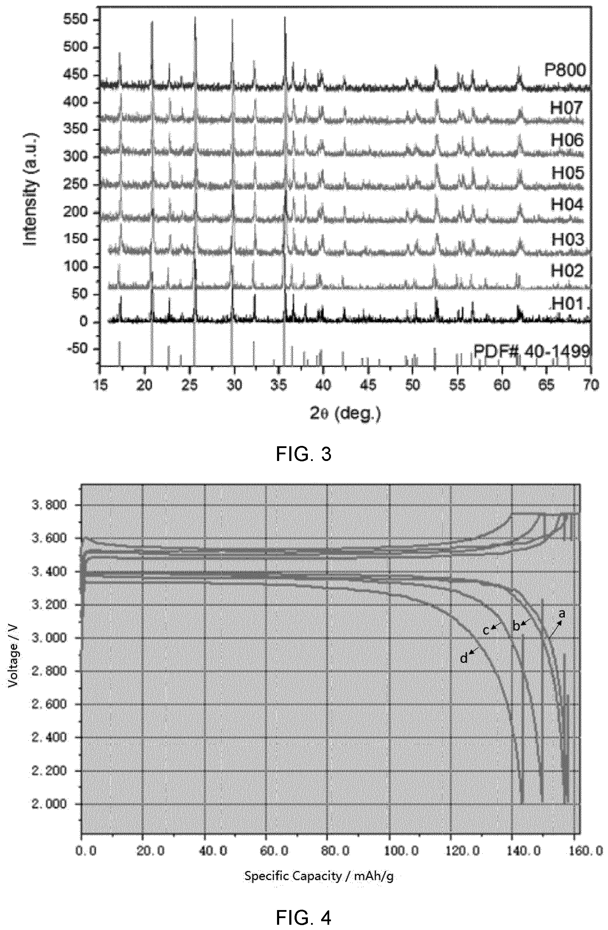

The morphology and structure of the high-rate lithium iron phosphate positive electrode material were characterized by SEM and XRD, and the results are shown in Fig. 1, Fig. 2 and Fig. 3. Fig. 1 is an SEM image of the high-rate lithium iron phosphate positive electrode material of the present disclosure at low magnification; Fig. 2 is an SEM image of the high-rate lithium iron phosphate positive electrode material of the present disclosure at high magnification; and Fig. 3 is the XRD spectrum of the high-rate lithium iron phosphate positive electrode material of the present disclosure.

It is shown from Fig. 1 and Fig. 2 that the primary particles of the high-rate lithium iron phosphate positive electrode material have a small particle size of about 50 nm, a concentrated distribution and a high degree of sphericity, and there are no large single crystal particles, which are conducive to achieving excellent rate performance. It is shown in FIG. 3 that the diffraction peaks of the lithium iron phosphate positive electrode material according to the present disclosure correspond to the standard diffraction peaks of lithium iron phosphate.

The physical and chemical properties of the high-rate lithium iron phosphate positive electrode material were characterized, where the elemental composition was detected by ICP; the powder resistance was measured by the four-probe method at a pressure of 10 MPa; and the compacted density was measured at a pressure of 3 tons. The results are shown in Table 1.

**Table 1**

| Items | | Units | Results |
|---|---|---|---|
| Elemental composition | Li | wt% | 4.53 |
| | Fe | | 34.31 |
| | P | | 19.53 |
| | C | | 2.21 |
| | Ca | ppm | 21.6 |
| | Mg | | 10.5 |
| | Na | | 26.5 |
| | Zn | | 7.5 |
| | Ni | | 1.2 |
| | Cr | | 0.2 |
| | Cu | | 0.1 |
| | Co | | 0.1 |
| | S | | 17.5 |
| | Al | | 13.6 |
| Particle size distribution | D10 | µm | 0.4 |
| | D50 | | 1.9 |
| | D90 | | 13.1 |
| Specific surface area | | m²/g | 19.16 |
| Iron dissolution | | ppm | 39.4 |
| Magnetic substance | | ppm | 0.11 |
| Free lithium | | ppm | 412 |
| pH | | / | 9.14 |
| Moisture | | ppm | 478 |
| Apparent density | | g/mL | 0.53 |
| Tap density | | g/mL | 1.01 |
| Compacted density | | g/mL | 1.82 |
| Powder resistance | | Ω.cm | 4.2 |

It is known from Table 1 that the high-rate lithium iron phosphate positive electrode material of the present disclosure mainly contains Li, Fe, P, and C, with a low impurity content. The high-rate lithium iron phosphate positive electrode material of the present disclosure has an extremely low powder resistance, indicating that the material has a uniform carbon coating and a good electronic conductivity. Since the high-rate lithium iron phosphate positive electrode material of the present disclosure is prepared by calcination at a high temperature, it has a high particle crystallinity, and thus a low iron dissolution and a low content of magnetic substance.

The high-rate lithium iron phosphate positive electrode material was assembled into a button battery according to the following process for property characterization: the lithium iron phosphate positive electrode material of the present disclosure, SP conductive agent and polyvinylidene fluoride (PVDF) were mixed uniformly by a high-speed mixer at a mass ratio of 90:5:5, and coated on an aluminum foil by an automatic coating machine, the coated aluminum foil was dried in an oven, and rolled to have a required compacted density, cut into small discs of a required size, weighed, and then dried again. The button battery was prepared by assembling a positive electrode case, a negative electrode case, a positive electrode plate, a lithium plate, a separator, and an electrolyte, using the aluminum foil finally obtained as the positive electrode, the lithium plate as the negative electrode, lithium hexafluorophosphate as the electrolyte, and a polyethylene material as the separator, and the button battery was hung on the battery test system to rest before testing.

The above assembled button battery was put on LAND battery test system for testing at a test temperature of 24-26 °C. The battery was charged to 3.75 V at 0.1 C, 1 C, 2 C, 5 C and 10 C rate, respectively, to obtain a charge capacity; and then the battery was discharged to 2.0 V at 0.1 C, 1C, 2 C, 5 C and 10 C rate, respectively, to obtain a discharge capacity. The test results are shown in Table 2 and FIG. 4. FIG. 4 is the charge-discharge graph of the high-rate lithium iron phosphate positive electrode material of the present disclosure at 1 C, 2 C, 5 C and 10 C. In FIG. 4, a, b, c, and d are the charge-discharge curves at 1 C, 2 C, 5 C, and 10 C, respectively..

**Table 2**

| Items | Units | Results |
|---|---|---|
| First charge capacity at 0.1 C | mAh/g | 160.8 |
| First discharge capacity at 0.1 C | mAh/g | 160.1 |
| First discharge efficiency | % | 99.6 |
| Discharge capacity at 10 C | mAh/g | 142.1 |
| Capacity retention rate at -20 °C | % | 90.9 |

It can be seen from Table 2 and Fig. 4 that the high-rate lithium iron phosphate positive electrode material of the present disclosure has a high capacity, excellent rate performance and low temperature performance.

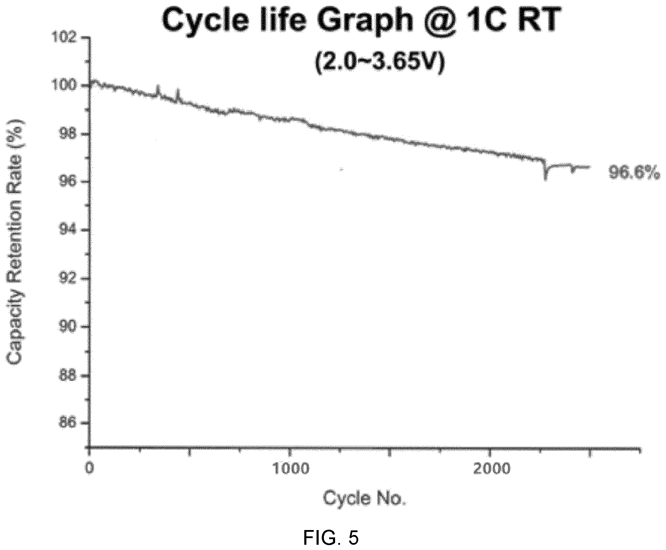

The high-rate lithium iron phosphate positive electrode material of the present disclosure was subjected to cycle performance test at 1 C at ambient temperature. Specifically, the high-rate lithium iron phosphate positive electrode material of the present disclosure was assembled into a 3 Ah pouch cell and tested by LAND battery test system at 1C rate and at 25 °C. The test results are shown in Fig. 5 which shows the cycle performance graph of the high-rate lithium iron phosphate positive electrode material of the present disclosure at 1C at ambient temperature.

It can be seen from FIG. 5 that the high-rate lithium iron phosphate positive electrode material of the present disclosure has a capacity retention rate of 96.6 % after 2500 cycles, indicating that it has excellent cycle performance.

### Example 2

Ferrous citrate, trioctyl phosphate and lithium acetate, in which a molar ratio of Fe, P and Li was 1:1:1.07, were mixed and stirred at a speed of 400 r/min at a temperature of 55 °C to obtain a paste.

The paste was granulated by extrusion and then put into a sagger which was then put into a roller furnace for calcination under the protection of nitrogen, the furnace including a first heating section, a first holding section, a second heating section, a second holding section and a cooling section. The paste was heated up to a temperature of 370 °C at a heating rate of 78 °C/h in the first heating section, and held at the temperature of 370 °C for 5 hours in the first holding section; and then heated up to a temperature of 790 °C at a heating rate of 145 °C/h in the second heating section, and held at the temperature of 790 °C for 10 hours in the second holding section; then cooled to a temperature ≤60 °C in the cooling section; and then discharged from the furnace, to obtain a calcined material.

The first heating section, the first holding section, the second heating section and the cooling section of the roller furnace were each equipped with a tuyere connected with a induced draft fan; nitrogen was introduced into the first heating section, the first holding section, the second heating section, the second holding section and the cooling section at a volume ratio of 2:1.8:1.5:0.8:2 through the bottom of the furnace. During the calcination, the nitrogen was introduced at a volume 13 times the volume of the chamber of the roller furnace per hour, and the pressure inside the chamber was 80 Pa higher than the external pressure.

The calcined material was pulverized by a fluidized bed jet mill with nitrogen having an oxygen content of less than 100 ppm and a dew point of lower than -20 °C at a pressure of 0.4 MPa and a temperature of 140 °C to obtain a pulverized material. The pulverized material was graded by a grading wheel having a diameter of 20 cm and made of ceramic, on which ceramic blades are evenly distributed and spaced at a distance of 1.2 cm, at a rotate speed of 600 r/min. The pulverized and graded material was then screened by an 150 mesh ultrasonic vibrating screen at an ultrasonic power of 4 kW, and then subjected to two-stage iron removal by staying in a 15000 Gs electromagnetic iron remover for ≥15 seconds. The material obtained from the iron removal was introduced into a constant temperature and humidity packaging room, and vacuum-packaged at a humidity of ≤10 % and a temperature of 25 °C to obtain the high-rate lithium iron phosphate positive electrode material.

The physical and chemical properties of the high-rate lithium iron phosphate positive electrode material were characterized, where the powder resistance was measured by the four-probe method at a pressure of 10 MPa; and the compacted density was measured at a pressure of 3 tons.The results showed that the high-rate lithium iron phosphate positive electrode material prepared in this example has a primary particle size of 70 nm, a D50 of 3.1 µm; a powder resistance of 6.2 Ω.cm, a compacted density of 1.97 g/mL, and a specific surface area of 18.9 m²/g. Accordingly, the high-rate lithium iron phosphate positive electrode material prepared in Example 2 also has a low powder resistance and a high specific surface area.

The high-rate lithium iron phosphate positive electrode material was assembled into a button battery according to the following process for property characterization: the lithium iron phosphate positive electrode material of the present disclosure, SP conductive agent and polyvinylidene fluoride (PVDF) were mixed uniformly by a high-speed mixer at a mass ratio of 90:5:5, and coated on an aluminum foil by an automatic coating machine, the coated aluminum foil was dried in an oven, and rolled to have a required compacted density, cut into small discs of a required size, weighed, and then dried again. The button battery was prepared by assembling a positive electrode case, a negative electrode case, a positive electrode plate, a lithium plate, a separator, and an electrolyte, using the aluminum foil finally obtained as the positive electrode, the lithium plate as the negative electrode, lithium hexafluorophosphate as the electrolyte, and a polyethylene material as the separator, and the button battery was hung on the battery test system to rest before testing.

The properties were characterized as follows: the above assembled button battery was put on LAND battery test system for testing at a test temperature of 25 °C. The battery was charged to 3.75 V at 0.1 C rate, to obtain a charge capacity, and then discharged to 2.0 V at 0.1 C rate to obtain a discharge capacity. The test results are shown in Table 3.

**Table 3**

| Items | Units | Results |
|---|---|---|
| First charge capacity at 0.1 C | mAh/g | 160.4 |
| First discharge capacity at 0.1 C | mAh/g | 159.5 |
| First discharge efficiency | % | 99.4 |
| Discharge capacity at 10 C | mAh/g | 141.4 |
| Capacity retention rate at -20 °C | % | 90.4 |

It can be seen from Table 3 that the high-rate lithium iron phosphate positive electrode material prepared in this example is similar to that in Example 1, which also has a high specific capacity, excellent rate performance and low temperature performance.

### Example 3

Ferrous acetate, tributyl phosphate and lithium citrate, in which a molar ratio of Fe, P and Li was 1:1:1.05, were mixed and stirred at a speed of 400 r/min at a temperature of 55 °C to obtain a paste.

The paste was granulated by extrusion and then put into a sagger which was then put into a roller furnace for calcination under the protection of nitrogen, the furnace including a first heating section, a first holding section, a second heating section, a second holding section and a cooling section. The paste was heated up to a temperature of 320 °C at a heating rate of 60 °C/h in the first heating section, and held at the temperature of 320 °C for 4 hours in the first holding section; and then heated up to a temperature of 690 °C at a heating rate of 120 °C/h in the second heating section, and held at the temperature of 690 °C for 4 hours in the second holding section; then cooled to a temperature ≤60 °C in the cooling section; and then discharged from the furnace, to obtain a calcined material.

The first heating section, the first holding section, the second heating section and the cooling section of the roller furnace were each equipped with a tuyere connected with a induced draft fan; nitrogen was introduced into the first heating section, the first holding section, the second heating section, the second holding section and the cooling section at a volume ratio of 2:1.8:1.5:0.9:2 through the bottom of the furnace. During the calcination, the nitrogen was introduced at a volume 12 times the volume of the chamber of the roller furnace per hour, and the pressure inside the chamber was 70 Pa higher than the external pressure.

The calcined material was pulverized by a fluidized bed jet mill with nitrogen having an oxygen content of less than 100 ppm and a dew point of lower than -20 °C at a pressure of 0.4 MPa and a temperature of 140 °C to obtain a pulverized material. The pulverized material was graded by a grading wheel having a diameter of 20 cm and made of ceramic, on which ceramic blades are evenly distributed and spaced at a distance of 1.2 cm, at a rotate speed of 600 r/min. The pulverized and graded material was then screened by an 150 mesh ultrasonic vibrating screen at an ultrasonic power of 4 kW, and then subjected to two-stage iron removal by staying in a 15000 Gs electromagnetic iron remover for ≥15 seconds. The material obtained from the iron removal was introduced into a constant temperature and humidity packaging room, and vacuum-packaged at a humidity of ≤10 % and a temperature of 25 °C to obtain the high-rate lithium iron phosphate positive electrode material.

The physical and chemical properties of the high-rate lithium iron phosphate positive electrode material were characterized, where the elemental composition was detected by ICP; the powder resistance was measured by the four-probe method at a pressure of 10 MPa; and the compacted density was measured at a pressure of 3 tons. The results are shown in Table 4.

**Table 4**

| Items | | Units | Results |
|---|---|---|---|
| Elemental composition | Li | wt% | 4.48 |
| | Fe | | 34.39 |
| | P | | 19.35 |
| | C | | 2.16 |
| Particle size distribution | D10 | µm | 0.4 |
| | D50 | | 1.8 |
| | D90 | | 12.7 |
| Specific surface area | | m²/g | 18.26 |
| Iron dissolution | | ppm | 30.5 |
| Magnetic substance | | ppm | 0.10 |
| Free lithium | | ppm | 387 |
| pH | | / | 9.11 |
| Moisture | | ppm | 423 |
| Apparent density | | g/mL | 0.57 |
| Tap density | | g/mL | 1.06 |
| Compacted density | | g/mL | 1.88 |
| Powder resistance | | Ω.cm | 6.7 |

It is known from Table 4 that the high-rate lithium iron phosphate positive electrode material prepared in this Example is similar to that prepared in Example 1, which mainly contains Li, Fe, P, and C, has a low powder resistance, a low iron dissolution and a low content of magnetic substance.

The high-rate lithium iron phosphate positive electrode material was assembled into a button battery according to the following process for property characterization: the lithium iron phosphate positive electrode material of the present disclosure, SP conductive agent and polyvinylidene fluoride (PVDF) were mixed uniformly by a high-speed mixer at a mass ratio of 90:5:5, and coated on an aluminum foil by an automatic coating machine, the coated aluminum foil was dried in an oven, and rolled to have a required compacted density, cut into small discs of a required size, weighed, and then dried again. The button battery was prepared by assembling a positive electrode case, a negative electrode case, a positive electrode plate, a lithium plate, a separator, and an electrolyte, using the aluminum foil finally obtained as the positive electrode, the lithium plate as the negative electrode, lithium hexafluorophosphate as the electrolyte, and a polyethylene material as the separator, and the button battery was hung on the battery test system to rest before testing. The assembled button battery was put on LAND battery test system for testing at a test temperature of 25 °C. The battery was charged to 3.75 V at 0.1 C rate, to obtain a charge capacity, and then discharged to 2.0 V at 0.1 C rate to obtain a discharge capacity. The test results are shown in Table 5.

**Table 5**

| Items | Units | Results |
|---|---|---|
| First charge capacity at 0.1 C | mAh/g | 160.4 |
| First discharge capacity at 0.1 C | mAh/g | 159.1 |
| First discharge efficiency | % | 99.2 |
| Discharge capacity at 10 C | mAh/g | 142.0 |
| Capacity retention rate at -20 °C | % | 90.5 |

It can be seen from Table 5 that the high-rate lithium iron phosphate positive electrode material prepared in this example also has a high specific capacity, excellent rate performance and low temperature performance.

The above embodiments are only preferred embodiments of the present disclosure, but the protection scope of the present disclosure is not limited thereto, and the equivalents or modifications made by any technical person familiar with the technical field according to the technical solution and the inventive concept of the present disclosure within the technical scope disclosed in the present disclosure, should be encompassed by the present disclosure.

## Claims

1. A high-rate lithium iron phosphate positive electrode material, comprising lithium iron phosphate and carbon coated on a surface of the lithium iron phosphate, wherein a primary particle of the material has a particle size of 30-70 nm.

2. The high-rate lithium iron phosphate positive electrode material according to claim 1, wherein the material has a D50 of 1 to 5 µm.

3. The high-rate lithium iron phosphate positive electrode material according to claim 1, wherein, the material has a specific surface area of 15 to 25 m²/g.

4. A method for preparing a high-rate lithium iron phosphate positive electrode material, comprising:
mixing an organic ferrous compound, an organic phosphorus compound and an organic lithium compound to obtain a mixture which is subjected to granulation and then calcination to obtain the high-rate lithium iron phosphate positive electrode material.

5. The method according to claim 4, wherein, the organic ferrous compound includes one or more of ferrous gluconate, ferrous citrate, ferrous acetate, and ferrous glycinate;
the organic phosphorus compound includes one or more of tributyl phosphate and trioctyl phosphate; and
the organic lithium compound includes one or more of lithium acetate and lithium citrate.

6. The method according to claim 4, wherein, a molar ratio of Fe, P and Li in the organic ferrous compound, the organic phosphorus compound and the organic lithium compound is 1:1:1-1.1.

7. The method according to claim 4, wherein the calcination comprises:
performing heating to a first temperature at a first heating rate, and holding the first temperature for a first period of time; and
continuing to perform heating to a second temperature at a second heating rate, and holding the second temperature for a second period of time.

8. The method according to claim 7, wherein, the first heating rate is 50-80 °C/h; the second heating rate is 100-150 °C/h; the first temperature is 250-400 °C; the second temperature is 600-800 °C; the first period of time is 2-5 hours; and the second period of time is 5-10 hours.

9. A positive electrode including the positive electrode material according to any one of claims 1-3.

10. A battery including the positive electrode according to claim 9.
